# EUROPEAN PATENT SPECIFICATION

(11) **EP 0 551 259 B1**
(45) Date of publication and mention of the grant of the patent: **22.03.1995**
(21) Application number: 91903803.4
(22) Date of filing: 24.01.1991
(51) Int. Cl.: F16H 59/04, B60K 20/02

(54) **GEAR SELECTOR DEVICE**
GANGSCHALTVORRICHTUNG
DISPOSITIF SELECTEUR DE VITESSE

(30) Priority: 06.02.1990 SE 9000413
(43) Date of publication of application: 21.07.1993
(73) Proprietor: SCANIA CV AKTIEBOLAG, S-151 87 Södertälje (SE)
(72) Inventor: ADLER, Horst, S-610 70 Vagnhärad (SE)
(86) International application number: SE9100052
(87) International publication number: WO9112444

(56) References cited:
- US-A- 4 146 120
- US-A- 4 519 266
- US-A- 4 886 151

## Description

The present invention relates to a gear selector device for remote operation of a gearbox, with an operating lever which is adjustable into different gear positions, and with transmitters for indicating these different gear positions.

In larger motor vehicles, such as lorries and busses, for example, great efforts have been made in recent years to improve the working environment of the driver. Spring system comfort, driving position and instrumentation have thus been adapted to the latest ergonomic findings. At the same time, increased engine power and sometimes unfavourable relative positioning in the vehicle of the gearbox and the gear selector device operated by the driver has led to it having become increasingly usual in mechanical gearboxes to use remote control of the gear-changing process, for example with electrical signal transmission from a gear selector device to a pneumatically or hydraulically functioning servo-unit on the gearbox. Advantages associated with this technique include among others that the freedom in the choice of gear-changing patterns is great, at the same time as the force invested by the driver can be reduced significantly.

A gear selector device intended for electrical signal transmission is described in US, A, 4 519 266. An operating lever is in this case movable in a selected gear-changing pattern and, with the aid of ball locks, can be locked in the positions for the different gears. A disadvantage of this and similar constructions, however, is that-the driver is deprived of the sensation of contact with the gearbox, which is valuable in normal manual gear-changing and gives him the possibility of knowing, for example, that synchronisation has been achieved and that the gear can be engaged and kept in the engaged position, without risk, for example, of unintentional touching of the operating lever initiating change which is not required.

The aim of the invention is to eliminate the disadvantages of this type of prior art and to bring about a gear selector device which gives the driver a better sensation of mechanical contact with the gearbox and consequently gives him the possibility of controlling the gear-changing in a better manner than previously. Moreover, unintentional incorrect operation is to be rendered more difficult.

According to the invention, this aim is achieved in that the operating lever is connected to a locking arrangement which is designed, upon engagement of a gear, to block the final phase of the movement of the operating lever to the position for the engaged gear until gear-changing has been carried out. Consequently, the driver is informed simply and clearly that the desired change has been completed, and, on the basis of this, he can carry out a safe clutch operation.

According to a preferred embodiment, the operating lever can be locked, by means of the locking arrangement, in the position for the engaged gear. Since the clutch of the vehicle is normally in engagement in this state, it is expedient that the locking arrangement is so designed that, when the operating lever is in the position for the engaged gear, it keeps the lever locked when the clutch of the vehicle is in engagement and unlocked when the clutch of the vehicle is out of engagement. Consequently, it is brought about that the operating lever cannot be moved unintentionally from its position for the engaged gear. Movement can only take place when the clutch of the vehicle is brought out of engagement.

With a gear selector device according to the invention, the driver is afforded good contact with the gearbox and can operate it in a simple and safe manner, with the operating comfort of a passenger car.

The invention is explained in greater detail below with the aid of an exemplary embodiment shown in the attached drawing, in which:
Fig. 1 shows diagrammatically how a gear selector device according to the invention is connected to a gearbox,
Fig. 2 shows in cross-section a side view of a gear selector device according to the invention,
Fig. 3 shows a cross-section along the line III-III in Fig. 2,
Fig. 4 shows a detail of Fig. 2 on enlarged scale,
Fig. 5 shows the gear-changing pattern of the gear selector device,
Fig. 6 shows a detail of Fig. 4,
Fig. 7 shows a cross-section along the line VII-VII in Fig. 6,
Fig. 8 shows a perspective view of the locking peg, and
Figs 9-12 show diagrammatically the locking arrangement in different states.

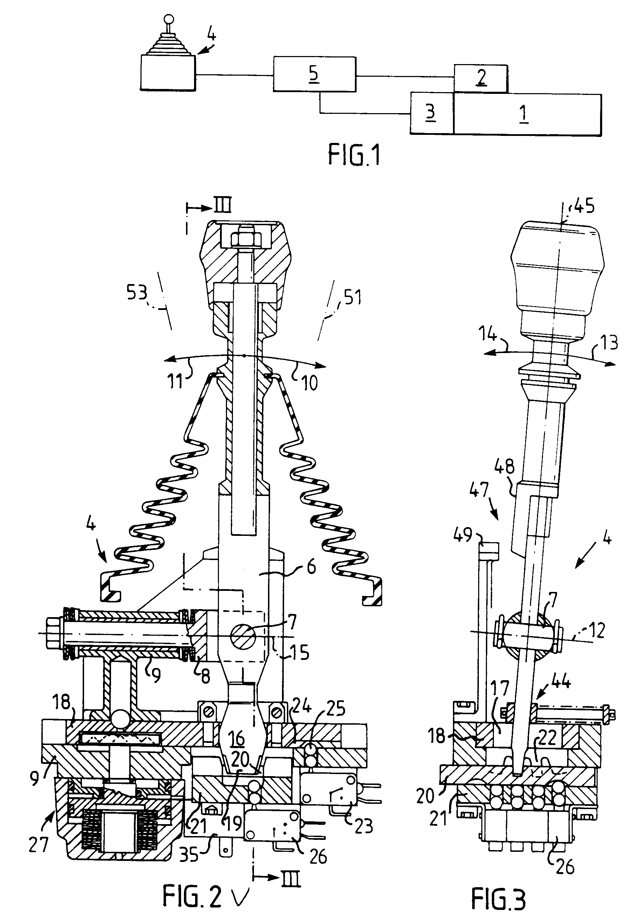

According to Fig. 1, a gearbox 1 is provided with a servo-unit 2, with the aid of which gears can be engaged and disengaged. Connected to the gearbox 1 is a clutch 3 operated by the driver and a driving engine (not shown). The gearbox 1 is remote-controlled by the driver with the aid of a gear selector device 4 which, via a control unit 5, is connected to the servo unit 2. The control unit 5, which is also connected to the clutch 3, can advantageously be situated close to the gearbox 1 which in turn can be situated at a great distance from the gear selector device 4, for example in the rear end of the vehicle.

The more detailed construction of the gear selector device 4 can be seen in Figs 2-4. An operating lever 6 is pivotably mounted on a shaft 7 which is supported by a holder 8 which in turn is pivotably mounted in a socket 9 forming part of the housing of the gear selector device. Consequently, the operating lever 6 can be pivoted in both the longitudinal direction and the lateral direction of the vehicle. Pivoting in the longitudinal direction of the vehicle takes place in the direction of the arrows 10 and 11, that is to say about an axis 12 represented by the shaft 7, and pivoting in the lateral direction of the vehicle takes place in the direction of the arrows 13 and 14, that is to say about an axis 15 represented by the holder 8.

The lower end 16 of the operating lever 6 is guided through an opening 17 in a locking slide 18 which, with the aid of the operating lever 6, is displaceable in a direction parallel to the axis 15, that is to say in the longitudinal direction of the vehicle. The opening 17 is designed in such a manner that the locking slide 18 is driven as soon as the operating lever 6 is pivoted about the axis 12, but on the other hand stands still when the operating lever 6 is pivoted about the axis 15. Consequently, a gear-changing pattern of the type shown in Fig. 5 is made possible, in which movement for engagement and disengagement of gears takes place in the longitudinal direction of the vehicle.

The lower tip 19 of the operating lever 6 is in engagement with a slide 20 which, by means of pivoting of the operating lever 6 about the axis 15, is displaceable across the direction of movement of the locking slide 18. The slide 20 is mounted in a support 21 which has on its upper side a number of control slots 22 for the lower tip 19 of the operating lever 6, which are parallel to the axis 15. These control slots 22 are each provided with an interruption, in which the slide 20 is situated, as a result of which the operating lever 6 in the neutral position shown in Fig. 2 can be pivoted in the lateral direction so that the slide 20 is displaced and the lower tip 19 of the operating lever is placed in a position in which, by means of pivoting of the operating lever about the axis 12, it can be guided into any of the control slots 22, in the forward or backward direction, in order to engage a given gear.

By sensing the movement of the locking slide 18 and the slide 20, it is possible to indicate which gear has been selected, and it is moreover possible to sense different phases in the different movements, according to desire. This sensing can expediently take place with the aid of, for example, switches which are connected to the control unit 5. For sensing the movement of the locking slide 18, there are three microswitches 23, only one of which is shown in Fig. 2. The function of these is to indicate started engagement of a gear and started disengagement of a gear. Expediently designed cam curves 24 on the locking slide 18 each act in this connection via transmission members 25 on their own microswitch 23. In similar manner, for sensing the movement of the slide 20, there are four microswitches 26 for indicating in which of the four control slots 22 the lower tip 19 of the operating lever 6 is situated.

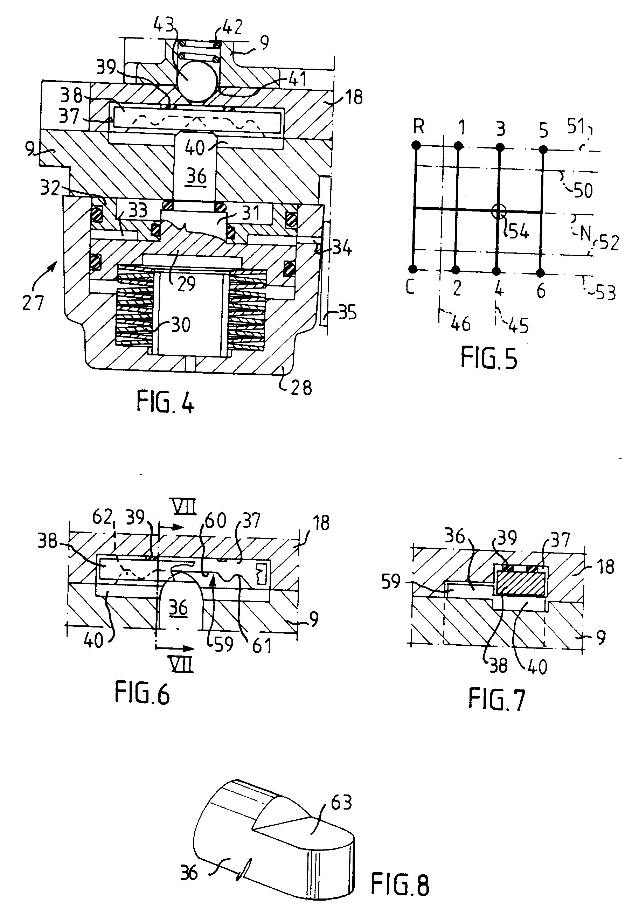

The locking slide 18 is acted on by a locking arrangement 27 which is associated with the socket 9 and the more detailed execution of which can be seen in Fig. 4. On the lower part of the socket 9, a housing 28 is arranged, in which a piston 29 is axially displaceable. The piston 29 is stressed in the upward direction by a spring 30 arranged in the housing and runs with a central pin 31 in a sealed manner through an end wall 32 mounted in a sealed manner in the housing 28. Between the end wall 32 and the piston 29, there is a chamber 33, into which pressure medium, for example compressed air, can be introduced via a duct 34, the opening and closing of which is controlled by a valve 35 which is electrically operated via the control unit 5.

The central pin 31 of the piston 29 supports a locking peg 36 which runs through the lower part of the socket 9 and arrives in a recess 37 which is arranged on the underside of the locking slide 18 and in which there is a locking plate 38 which is stressed in the downward direction by a spring 39. In the socket 9, there is an upwardly facing recess 40 which, in the neutral position shown of the operating lever 6, is situated opposite the recess 37 in the locking slide and on the whole has the same extent in the longitudinal direction of the locking slide as the latter. The recess 40 is, however, not as deep as the recess 37 but has a depth which is less than the thickness of the locking plate 38, while the recess 37 has a depth which is greater than the thickness of the locking plate 38. The significance of this is explained below.

The upper side of the locking slide 18 is provided with a locking recess 41 for a locking member 43, in this case in the form of a ball, which is mounted in the socket 9 and stressed by a spring 42. Consequently, the operating lever 6 can, with the aid of the locking slide 18, be locked in neutral position according to Fig. 2.

The gear selector device 4 according to the invention, described above, can be used to obtain expedient gear-changing patterns in different types of gearboxes. An example of an expedient gear-changing pattern in a gearbox in which seven forward gears are used is shown in Fig. 5. The gearbox consists in this case of a basic gearbox with one reverse gear and four forward gears combined with a planetary gearbox with a high and low gear, as a result of which a total of eight forward gears and two reverse gears are possible. For use in busses, for example, this number of gears is, however, unnecessarily high and it has therefore been decided not to use all available gears. The gears used have moreover been grouped in a manner which is as easy to use as possible.

In the neutral position N (according to Fig. 2), the operating lever 6 is kept centred, with the aid of a centring arrangement 44 (see Fig. 3), in a position 45 in which it can be pivoted either forwards in the direction of the arrow 10 for engaging 3rd gear or backwards in the direction of the arrow 11 for engaging 4th gear. Against spring force from the centring arrangement 44, the operating lever 6 can be pivoted either in the direction of the arrow 13 to the position for either 5th or 6th gear. The position for either 1st or 2nd gear is reached instead by pivoting in the direction of the arrow 14. Upon continued pivoting in the direction of the arrow 14, a locking position 46 is reached, in which a back locking arrangement 47, in the form of a back lock 48, which is axially movable on the operating lever 6, and a fixed stop 49 on the socket 9, has to be released in order to reach the position for the gears R and C, that is to say reverse gear and crawler gear. Release takes place by means of displacing the back lock 48 upwards.

According to Fig. 5, in the direction forwards (in the direction of the arrow 10) from the neutral position N, a locking position 50 is reached, and subsequently a position 51 for the engaged gear. Correspondingly, in the direction backwards (in the direction of the arrow 11), a locking position 52 is reached, and subsequently a position 53 for the engaged gear. The operating lever cannot be guided from the locking positions to the position for the engaged gear before gear-changing has been carried out.

As can be seen from Figs 6 and 7, there is in the locking slide 18, next to the recess 37 for the locking plate 38, a locking recess 59 which interacts with the locking peg 36 and which is divided into a central recess 60 and, on either side thereof, two end recesses 61 and 62. When the operating lever 6 is situated in the position 51 for the engaged gear, the locking peg 36 is designed to be in engagement with the end recess 61 while, in the position 53 for the engaged gear on the other hand, the locking peg 36 is designed to be in engagement with the end recess 62. Between the locking positions 50 and 52, the locking peg 36 is designed to be in the central recess 60.

As can be seen in particular from Fig. 8, the locking peg 36 is provided, at the top of a part of its width, with an indentation 63 designed for the locking plate 38, see Fig 7.

The gear selector device 4 functions as follows.

In the position shown in Figs 2 and 3, the operating lever 6 is situated in its centred neutral position (position 54 in Fig. 5), in which the locking member 43 is in engagement with the locking recess 41 in the locking slide 18. The chamber 33 is free of pressure, as a result of which the spring 30 presses the locking peg 36 up towards the locking plate 38 and keeps the latter in the recess 37 in the locking slide 18. At the same time, the locking peg 36 is in engagement with the central recess 60.

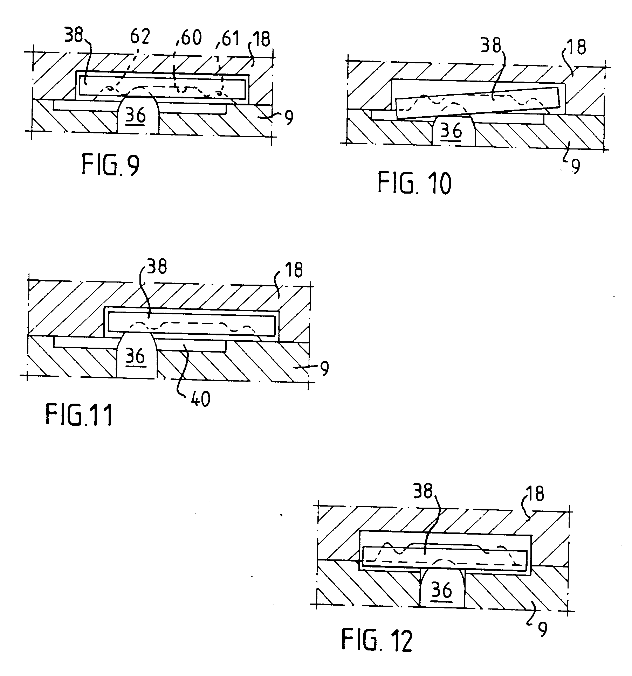

In order to be able to engage 4th gear, for example, the clutch pedal is pressed down and the operating lever 6 is pivoted backwards in the direction of the arrow 11. This causes the locking slide 18 to be displaced to the right in the drawing and a signal to be given to the control unit 5 that engagement of 4th gear is desired. In order to be able to pass the locking position 52, gear-changing must first have been carried out. If this is not the case, the movement is checked by the locking peg 36 according to Fig. 9 coming to be situated in the left end of the central recess 60 and thus to prevent continued movement. As soon as gear-changing has taken place, possibly before the operating lever has been pivoted all the way to the locking position 52, the valve 35 opens the supply of pressure medium to the chamber 33, with the result that the piston 29 and the locking peg 36 are displaced downwards, at the same time as the locking plate 38 tips according to Fig. 10. The locking slide 18, and thus the operating lever 6 also, can now continue its movement to the position shown in Fig 11 for the completely engaged gear, in which the end recess 62 in the locking slide 18 is situated opposite the locking peg 36. After this last part of the movement of the locking slide 18, the driver, who is now aware that he has engaged the gear, can let the clutch up. At the same time, the chamber 33 is vented, with the result that the locking peg 36 comes into engagement with the end recess 62. Consequently, the operating lever is locked in the position for the engaged gear. Correspondingly, engagement of other gears can take place after the operating lever has been pivoted to the correct position in the lateral direction.

Upon changing from one gear to another, first the clutch is depressed, which causes the chamber 33 to be pressurised so that the locking peg 36 goes to its lower position. After a short movement of the locking slide 18, a signal is given to the control unit 5 that disengagement of the gear is desired. The locking slide 18 can now, in the same manner as in Fig. 10, be displaced into a position in which the central recess 60 in the locking slide 18 is situated above the locking peg. On the way towards the N-position, the chamber 33 is again vented so that the locking peg 36 rises to an upper position according to Fig. 9. The movement is subsequently continued, in the direction towards, for example, 3rd gear. When the change to 3rd gear is complete, the locking peg 36 is again lowered, with the result that the stop position 50 can be passed and the position 51 can be reached, in which the locking peg 36 again rises when the clutch is let up. Locking of the engaged gear has now taken place.

If changing between two gears takes place moderately quickly, the locking peg 36 does not have time to reach up into the central recess 60 and to be lowered before the other end of the latter is reached. The driver thus does not experience any actual interruption in the movement, but receives the impression of a smooth change.

If, on the other hand, the driver is in too much of a hurry in changing between two gears, the situation shown in Fig. 12 arrises. When the clutch is depressed, the locking peg 36 is lowered in the usual manner into the position shown. The locking peg does not, however, reach up in advance of the N-position of the locking slide 18, which results in the locking plate 38 ending up in the recess 40 in the socket 9. Since the locking plate 38, as mentioned previously, is thicker than the recess 40 is deep, it comes to prevent the movement of the locking slide. This ensures that the movement is braked until the locking peg 36 has had time to take up its intended position, in which it keeps the locking plate 38 in an upper position. The next stop position can thus not be passed before the change has been carried out in the gearbox.

In Figs 9-12, for the sake of clarity and simplicity, the spring 39 has been omitted.

By means of the invention, the operating lever 6 can thus not be guided completely into the engaged position before the gear is actually engaged. The driver thus knows with certainty that the gear has actually been engaged, which facilitates his operation of the clutch pedal. As the operating lever consequently serves as an indicator of gear selection, no other type of indication, such as for example optical or acoustic indication, is required. Gear-changing can thus in principle take place with the same comfort and safety as in the case of, for example, a passenger car of modern type with manual gear-changing. It is moreover an advantage that disengagement of a gear cannot take place without the clutch being depressed.

Furthermore, the operating movement of the gear lever into the neutral position causes the gearbox to be brought to take up the neutral position. This means that a situation can never arise, in which the gear lever is situated in neutral position in spite of the fact that a gear in the gearbox is engaged. This is important from the point of view of safety.

The procedure described for gear operation has referred to normal driving conditions. The gear selector device can additionally be designed for operation even when a fault has developed or when abnormal driving conditions exist. For example, there is a risk that an engaged gear cannot be disengaged if the clutch of the vehicle should suffer breakdown during travelling. If the clutch of the vehicle does not function, there is a risk that the control, associated therewith, of the locking piston also stops. In this case, however, the locking piston and locking members on the slide, which interact therewith, as well as the spring member which interacts with the locking piston are dimensioned in order to bring it about that, in an emergency situation, the gear lever can be forced, only with the aid of abnormally great effort, for example by the driver striking the gear lever with great force, into the neutral position in spite of the locking action. In accordance with the above, this causes the gearbox also to be brought into the neutral position.

The signal transmission, necessary as a function of the movement of the operating lever, can take place in a number of other manners than described above, for example with Hall effect transmitters, optical transmitters etc. The control unit can in this connection be adapted with regard to actual requirements, with regard to among other things the type of gearbox and the type of gear-changing pattern.

The operating lever has been described above as being pivotably mounted, but it is also conceivable to use an operating lever which is instead only displaceable between different gear positions.

## Claims

1. Gear selector device for remote operation of a gearbox (1), with an operating lever (6) which is adjustable into different gear positions, and with transmitters (23, 26) for indicating these different gear positions,
characterised in that the operating lever (6) is connected to a locking arrangement (27) which is designed, upon engagement of a gear, to block the final phase of the movement of the operating lever to the position for the engaged gear until gear-changing has been carried out.

2. Gear selector device according to Claim 1, characterised in that the operating lever (6) can be locked, by means of the locking arrangement (27), in the position for the engaged gear.

3. Gear selector device according to Claim 2, characterised in that the locking arrangement (27) is so designed that, when the operating lever(6) is in the position for the engaged gear, it keeps the lever locked when the clutch of the vehicle is in engagement and unlocked when the clutch of the vehicle is out of engagement.

4. Gear selector device according to any one of Claims 1-3, characterised in that the locking arrangement (27) includes on the one hand a locking slide (18) which is coupled to the operating lever (6) and which is displaceable by means of the operating lever when the latter is operated for engagement and disengagement of a gear, and on the other hand a locking peg (36) which is displaceable across the direction of movement of the locking slide (18) and which is designed to interact with locking members (60-62) on the locking slide as a function of the position of the locking slide.

5. Gear selector device according to Claim 4, characterised in that the locking members (60-62) of the locking slide consist of recesses which face towards the locking peg (36) and are arranged one after another, there being on the one hand a central recess (60), which allows the operating lever (6) to be moved a given distance in both directions from a neutral position, and on the other hand, situated on either side of the central recess, two end recesses (61, 62) which represent the engaged gear position of the operating lever.

6. Gear selector device according to Claim 5, characterised in that the locking peg (36) is so designed that, in the neutral position of the operating lever (6), it is in engagement with the central recess (60) and remains in engagement therewith until, upon engagement of a gear, gear-changing has been carried out.

7. Gear selector device according to any one of Claims 4-6, characterised in that the locking peg (36) is spring-loaded (30) into the locking position and is so designed that, by means of the action of pressure medium, can be guided out of the locking position.

8. Gear selector device according to any one of Claims 1-7, characterised in that the locking arrangement (27) is so designed that, in the event of too rapid displacement of the operating lever (6) between two engaged gear positions, it temporarily blocks this displacement when the operating lever reaches neutral position.

9. Gear selector device according to Claim 8, characterised in that the locking peg (36) interacts with a locking plate (38) which is arranged in a recess (37) in the locking slide (18) and which is preferably spring-loaded (39) in the direction towards the locking peg (36), in that, in the part (9) of the gear selector device in which the locking peg (36) is mounted, there is arranged close to the locking peg a recess (40) which fits the locking plate (38), and in that the locking plate (38) is so designed that, in a given position of the locking peg (36), it can be situated at the same time both in this recess (40) and in its recess (37) in the locking slide (18) in order thus temporarily to prevent displacement of the locking slide.

## Patentansprüche

1. Gangschaltvorrichtung zur Fernbedienung eines Getriebes (1), mit einem Schalthebel (6), der in verschiedene Schaltstellungen eingestellt werden kann, und mit Übertragungseinrichtungen (23, 26) für die Anzeige dieser verschiedenen Schaltstellungen,
dadurch gekennzeichnet, daß der Schalthebel (6) mit einer Arretierungsanordnung (27) verbunden ist, die so ausgebildet ist, daß sie, nach Einlegen eines Ganges, die Endphase der Bewegung des Schalthebels in die Stellung für den eingelegten Gang so lange blockiert, bis der Gangwechsel durchgeführt worden ist.

2. Gangschaltvorrichtung nach Anspruch 1, dadurch gekennzeichnet, daß der Schalthebel (6) durch die Arretierungsanordnung (27) in der Stellung für den eingelegten Gang arretiert werden kann.

3. Gangschaltvorrichtung nach Anspruch 2, dadurch gekennzeichnet, daß die Arretierungsanordnung (27) so ausgebildet ist, daß sie, wenn der Schalthebel (6) in der Stellung für den eingelegten Gang ist, den Hebel arretiert hält, wenn die Fahrzeugkupplung eingerückt ist und ihn löst, wenn die Fahrzeugkupplung ausgerückt ist.

4. Gangschaltvorrichtung nach einem der Ansprüche 1-3, dadurch gekennzeichnet, daß die Arretierungsanordnung (27) einerseits einen Sperrschlitten (18), der an den Schalthebel (6) gekoppelt ist und mit Hilfe des Schalthebels verschiebbar ist, wenn dieser für das Einrücken und das Ausrücken eines Ganges betätigt wird, und andererseits einen Sperrzapfen (36) aufweist, der quer zur Bewegungsrichtung des Sperrschlittens (18) verschiebbar ist und der so ausgebildet ist, daß er mit Sperrgliedern (60-62) auf dem Sperrschlitten als eine Funktion der Stellung des Sperrschlittens in Wechselwirkung steht.

5. Gangschaltvorrichtung nach Anspruch 4, dadurch gekennzeichnet, daß die Sperrglieder (60-62) des Sperrschlittens aus Aussparungen bestehen, die dem Sperrzapfen (36) gegenüberliegen und hintereinander angeordnet sind, wobei einerseits eine zentrale Aussparung (60) vorgesehen ist, die es dem Schalthebel (6) erlaubt, in beide Richtungen von einer neutralen Stellung über eine bestimmte Entfernung bewegt zu werden, und wobei andererseits an jeder Seite der zentralen Aussparung zwei Endaussparungen (61, 62) vorgesehen sind, welche die eingerückte Schaltstellung des Schalthebels darstellen.

6. Gangschaltvorrichtung nach Anspruch 5, dadurch gekennzeichnet, daß der Sperrzapfen (36) so ausgebildet ist, daß er in neutraler Stellung des Schalthebels (6) mit der zentralen Aussparung (60) in Eingriff ist und mit dieser in Eingriff bleibt, bis bei Einrücken eines Ganges der Gangwechsel durchgeführt worden ist.

7. Gangschaltvorrichtung nach einem der Ansprüche 4-6, dadurch gekennzeichnet, daß der Sperrzapfen (36) durch eine Feder in der Sperrstellung vorgespannt und so ausgebildet ist, daß er aufgrund der Wirkung eines Druckmediums aus der Sperrstellung herausgeführt werden kann.

8. Gangschaltvorrichtung nach einem der Ansprüche 1-7, dadurch gekennzeichnet, daß die Arretierungsanordnung (27) so ausgebildet ist, daß sie im Falle einer zu schnellen Verschiebung des Schalthebels (6) zwischen zwei eingerückten Gangstellungen diese Verschiebung vorübergehend blockiert, wenn der Schalthebel die neutrale Stellung erreicht.

9. Gangschaltvorrichtung nach Anspruch 8, dadurch gekennzeichnet, daß der Sperrzapfen (36) mit einer Sperrplatte (38) zusammenwirkt, die in einer Aussparung (37) im Sperrschlitten (18) angeordnet ist und die vorzugsweise durch eine Feder (39) zum Sperrzapfen (36) hin vorgespannt ist, daß im Teil (9) der Gangschaltvorrichtung, in dem der Sperrzapfen (36) eingebaut ist, eine Aussparung (40) nahe dem Sperrzapfen angeordnet ist, die in die Sperrplatte (38) paßt, und daß die Sperrplatte (38) so ausgebildet ist, daß sie in einer bestimmten Stellung des Sperrzapfens (36) gleichzeitig sowohl in dieser Aussparung (40) als auch in der Aussparung (37) im Sperrschlitten (18) angeordnet sein kann, um so die Verschiebung des Sperrschlittens vorübergehend zu verhindern.

## Revendications

1. Dispositif sélecteur de vitesse pour l'actionnement à distance d'une boîte de vitesses (1) avec un levier de manoeuvre (6) qui est réglable dans différentes positions de vitesse et avec des émetteurs (23, 26) pour indiquer ces différentes positions de vitesse, caractérisé en ce que le levier de manoeuvre (6) est relié à un ensemble de blocage (27) qui est conçu, lors de la mise en prise d'une vitesse, pour bloquer la phase finale du mouvement du levier de manoeuvre vers la position pour la vitesse en prise jusqu'à ce que le changement de vitesse ait été réalisé.

2. Dispositif sélecteur de vitesse selon la revendication 1, caractérisé en ce que le levier de manoeuvre (6) peut être bloqué au moyen de l'ensemble de blocage (27) dans la position pour la vitesse en prise.

3. Dispositif sélecteur de vitesse selon la revendication 2, caractérisé en ce que l'ensemble de blocage (27) est réalisé de telle façon que, lorsque le levier de manoeuvre (6) est dans la position pour la vitesse en prise, il maintient le levier bloqué quand l'embrayage du véhicule est en prise et débloqué quand l'embrayage du véhicule est hors de prise.

4. Dispositif sélecteur de vitesse selon l'une quelconque des revendications 1 à 3, caractérisé en ce que l'ensemble de blocage (27) comprend, d'une part, un coulisseau de blocage (18) qui est couplé au levier de manoeuvre (6) et qui est apte à être déplacé au moyen du levier de manoeuvre lorsque ce dernier est actionné pour la mise en prise et hors de prise d'une vitesse et, d'autre part, un mentonnet de blocage (36) qui est apte à être déplacé au travers de la direction de mouvement du coulisseau de blocage (18) et qui est conçu pour interagir avec les éléments de blocage (60-62) sur le coulisseau de blocage en fonction de la position du coulisseau de blocage.

5. Dispositif sélecteur de vitesse selon la revendication 4, caractérisé en ce que les éléments de blocage (60-62) du coulisseau de blocage se composent d'évidements qui sont tournés vers le mentonnet de blocage (36) et qui sont disposés les uns après les autres, il y a, d'une part un évidement central (60) qui permet au levier de manoeuvre (6) d'être déplacé d'une distance donnée dans les deux directions à partir d'une position neutre et, d'autre part, deux évidements d'extrémité (61, 62) situés sur l'un ou l'autre côté de l'évidement central, qui représentent la position de vitesse en prise du levier de manoeuvre.

6. Dispositif sélecteur de vitesse selon la revendication 5, caractérisé en ce que le mentonnet de blocage (36) est conçu de telle façon que, dans la position neutre du levier de manoeuvre (6) il est en contact avec l'évidement central (60) et reste en contact avec celui-ci, jusqu'à ce que, lors de la prise d'une vitesse, le changement de vitesse ait été réalisé.

7. Dispositif sélecteur de vitesse selon l'une quelconque des revendications 4 à 6, caractérisé en ce que le mentonnet de blocage (36) est soumis à un ressort (30) dans la position de blocage et est conçu de telle façon que, au moyen de l'action du milieu de pression, il peut être guidé hors de la position de blocage.

8. Dispositif sélecteur de vitesse selon l'une quelconque des revendications 1 à 7, caractérisé en ce que l'ensemble de blocage (27) est conçu de telle façon que, dans le cas d'un déplacement trop rapide du levier de manoeuvre (6) entre deux positions de vitesse en prise, il bloque temporairement ce déplacement quand le levier de manoeuvre atteint la position neutre.

9. Dispositif sélecteur de vitesse selon la revendication 8, caractérisé en ce que le mentonnet de blocage (36) interagit avec une plaque de blocage (38) qui est disposée dans un évidement (37) dans le coulisseau de blocage (18) et qui est, de préférence, soumis à un ressort (39) dans la direction vers le mentonnet de blocage (36), en ce que dans la partie (9) du dispositif sélecteur de vitesse dans laquelle le mentonnet de blocage (36) est monté, il est prévu près du mentonnet de blocage un évidement (40) qui reçoit la plaque de blocage (38) et en ce que la plaque de blocage (38) est conçue de telle façon que, dans une position donnée du mentonnet de blocage (36), elle peut être située en même temps à la fois dans cet évidement (40) et dans son évidement (37) dans le coulisseau de blocage (18) afin d'empêcher ainsi temporairement le déplacement du coulisseau de blocage.
